# EUROPÄISCHE PATENTSCHRIFT

(11) **EP 1 844 244 B1**
(45) Veröffentlichungstag und Bekanntmachung des Hinweises auf die Patenterteilung: **06.08.2008**
(21) Anmeldenummer: 06706472.5
(22) Anmeldetag: 28.01.2006
(51) Int. Cl.: F16C 33/12, F16C 33/14

(54) **PLEUELLAGERSCHALE ODER -BUCHSE ODER HAUPTLAGERSCHALE BEI VERBRENNUNGSMOTOREN**
CONNECTING ROD BEARING SHELL OR BUSH OR MAIN BEARING SHELL FOR COMBUSTION ENGINES
COQUILLE DE COUSSINET DE BIELLE OU COQUILLE DE PALIER PRINCIPAL DE MOTEURS COMBUSTION INTERNE

(30) Priorität: 04.02.2005 DE 102005006719
(43) Veröffentlichungstag der Anmeldung: 17.10.2007
(73) Patentinhaber: KS Gleitlager GmbH, 68789 St. Leon-Rot (DE)
(72) Erfinder: SCHUEBERT, Werner, 69168 Wiesloch (DE); DEICKE, Klaus, 74257 Untereisesheim (DE); BICKLE, Wolfgang, 68799 Reilingen (DE); GERLACH, Friedhelm, 26810 Westoverleding (DE)
(74) Vertreter: Friz, Oliver
(86) Internationale Anmeldenummer: PCT/EP2006/000758
(87) Internationale Veröffentlichungsnummer: WO 2006/082000

(56) Entgegenhaltungen:
- DE-C1- 10 144 126

## Beschreibung

Die Erfindung betrifft eine Pleuellagerschale oder -buchse bei Verbrennungsmotoren oder Hauptlagerschale zur Lagerung der Kurbelwelle bei Verbrennungsmotoren, aus einem Gleitlagerverbundwerkstoff mit einer metallischen, insbesondere aus Stahl gebildeten Stützschicht und einer darauf aufgebrachten metallischen Gleitschicht, wobei die Gleitschicht von einer Kupfer-Zink-Legierung mit 10 - 25 Gew.-% Zn und 1-8 Gew.-% Ni gebildet ist, und mit einer dem Gleitpartner zugewandten aufgesputterten Overlay-Schicht aus einer Aluminium-Zinn-Legierung.

Die Anforderungen an Pleulellagerelemente, nämlich an den Kurbelzapfen einer Kurbelwelle umschließende Pleuellagerschalen und den Kolbenbolzen umschließende, in das kleine Pleuellager einpressbare Pleuellagerbuchsen, sind vielfältig. Zum einen wird für die Pleuellagerschalen die Beständigkeit auch bei hohen Gleitgeschwindigkeiten und mittleren Belastungen gefordert, zum anderen wird bei Pleuellagerbuchsen die Beständigkeit bei hohen Belastungen und demgegenüber höheren Temperaturen, jedoch bei geringen bis moderaten Gleitgeschwindigkeiten gefordert. Die Anforderungen an Hauptlagerschalen für Kurbelwellen sind geprägt durch die dort auftretende gegenüber Pleuellagerschalen geringere Belastung und die hohe Gleitgeschwindigkeit bei verhältnismäßig moderaten Temperaturen. Hauptlagerschalen müssen zudem im Stande sein, Fluchtungsfehler der Kurbelwelle auszugleichen.

Eine gattungsgemäße Pleuellagerschale oder -buchse bzw. eine Hauptlagerschale der eingangs genannten Art sind bekannt aus DE 101 44 126 A der Anmelderin, wobei der Nickelgehalt der Gleitschicht nach dieser Druckschrift lediglich 1 bis 3 Gew.-% Nickel beträgt.

Wenn die erwähnte aufgesputterte Overlay-Schicht aus Aluminium-Zinn-Legierung als Laufschicht dienen soll, so werden hier Schichtdicken von über 10 µm gewählt, wenn sie lediglich als Einlaufschicht dienen soll, werden Schichtdicken im Bereich 2 bis 6 µm gewählt. Man ging seither davon aus, dass es für das Aufbringen der Overlay-Schicht, aber auch im Hinblick auf den anschließenden Betrieb bei höheren Temperaturen zwingend erforderlich ist, vor dem Aufsputtern dieser Schicht eine Diffusionssperrschicht, die üblicherweise aus Nickel oder Nickellegierung gebildet ist, auf der Gleitschicht auszubilden. Eine solche Diffusionssperrschicht weist üblicherweise eine Dicke von wenigstens 1,5 µm, insbesondere von wenigstens 2,0 µm auf. Sie soll die Diffusion der Legierungsbestandteile der Gleitschicht in die Overlay-Schicht, aber auch des Zinns der Overlay-Schicht in die Gleitschicht verhindern.

Hiervon ausgehend liegt der vorliegenden Erfindung die Aufgabe zugrunde, eine gattungsgemäße Pleuellagerschale oder -buchse oder eine Hauptlagerschale der eingangs genannten Art auf wirtschaftlichere Weise herzustellen.

Diese Aufgabe wird erfindungsgemäß dadurch gelöst, dass die aufgesputterte Overlay-Schicht unmittelbar auf die Gleitschicht aufgesputtert ist, also nicht auf eine zuvor aufgebrachte Diffusionssperrschicht, und dass dadurch eine dünne Nickel-Sperrschicht gebildet ist, die eine Dicke von weniger als 1 µm aufweist. Die Nickel-Sperrschicht weist insbesondere eine Dicke von weniger als 0,9 µm, insbesondere von weniger als 0,8 µm, insbesondere von weniger als 0,6 µm, und weiter insbesondere von weniger als 0,5 µm, jedoch von wenigstens 0,1 µm, insbesondere von wenigstens 0,2 µm auf.

Es wurde mit der vorliegenden Erfindung festgestellt, dass sich eine Overlay-Schicht der genannten Art auch ohne vorheriges Aufbringen einer Diffusionssperrschicht, insbesondere eines Nickel-Damms, auf die Gleitschicht aufsputtern lässt, und zwar ohne dass es zu unerwünschten Diffusionsprozessen und zur Ausbildung einer breiten Übergangszone zwischen Gleitschicht und Overlay-Schicht mit undefinierter Zusammensetzung kommt. Vielmehr wurde überraschenderweise festgestellt, dass sich beim Aufsputtern der Aluminium-Zinn-Legierung auf die nickelhaltige Gleitschicht von selbst eine sehr dünne Nickel-Sperrschicht einer Dicke von < 1 µm ausbildet. Diese Nickel-Sperrschicht wirkt dann ähnlich wie eine seither separat aufgebrachte dicke Diffusionssperrschicht und verhindert eine unkontrollierte Diffusion der Bestandteile der Gleitschicht und der Overlay-Schicht.

Es erweist sich weiter als vorteilhaft, wenn die Gleitschicht 1 bis 3 Gew.-% Mangan aufweist, was sich im Hinblick auf eine Kornfeinung als vorteilhaft erweist.

Des Weiteren erweist es sich als vorteilhaft, wenn die Gleitschicht 0,5 - 6 Gew.-% Eisen, insbesondere 1 - 4,5 Gew.-% Eisen aufweist. Ein derart hoher Eisengehalt wirkt verfestigend und steigert die Zähigkeit des Werkstoffs; er führt zudem zu einer Kornfeinung und erhöht die Rekristallisierungstemperatur der Legierung.

Ein Zusatz von 1 bis 3 Gew.-% Aluminium erhöht die Festigkeit der Legierung der Gleitschicht noch etwas.

Eine vorteilhafte Zusammensetzung der Legierung der Gleitschicht ist im Anspruch 8 angegeben.

Eine erfindungsgemäße Pleuellagerschale oder -buchse bzw. eine Hauptlagerschale mit einer sehr dünnen Diffusionssperrschicht ist also dadurch erhältlich, dass die Overlay-Schicht aus einer Aluminium-Zinn-Legierung ohne vorheriges Vorsehen einer Diffusionssperrschicht unmittelbar auf die Gleitschicht aufgesputtert wird.

Es wird außerdem Schutz beansprucht für ein Verfahren zum Herstellen einer Pleuellagerschale oder -buchse oder einer Hauptlagerschale der erfindungsgemäßen Art mit den Merkmalen der Ansprüche 10 und 11.

Es wird auch darauf hingewiesen, dass sich die vorliegende Erfindung nicht ausschließlich auf Pleuellagerschalen oder -buchsen und Hauptlagerschalen bei Verbrennungsmotoren beschränkt; die Erfindung erfasst vielmehr auch Gleitlagerverbundwerkstoffe als solche mit Stahlstützschicht und Gleitschicht mit vorzugsweise moderatem Zinkgehalt von 10 bis 25 Gew.-% und mit 1 bis 8 Gew.-% Nickel, bei denen erfindungsgemäß erkannt wird, dass durch unmittelbares Aufsputtern einer Aluminium-Zinn-Legierung auf die vorzugsweise zuvor plasma-geätzte Oberfläche der Gleitschicht eine sehr dünne Diffusionssperrschicht gebildet werden kann.

Weitere Einzelheiten, Merkmale und Vorteile der Erfindung ergeben sich aus den beigefügten Patentansprüchen und aus der nachfolgenden zeichnerischen Darstellung und Beschreibung einer bevorzugten Ausführungsform der Erfindung.

In der Zeichnung zeigt:
- Figuren 1a - 1d: jeweils Schliffbilder eines Schnitts senkrecht zur Ebene eines Gleitlagerverbundwerkstoffs einer erfindungsgemäßen Pleuellagerschale (links) und einer Pleuellagerschale mit zusätzlicher Diffusionssperrschicht, nach dem Aufsputtern und nach 100 h, 200 h und 500 h Warmauslagerung bei 180°C;
- Figuren 2a - 2f: ein Schliffbild und rasterelektronenmikroskopische Auswertungen des Gehalts an Al, Zn, Cu, Sn und Ni bei einem Gleitlagerverbundwerkstoff einer erfindungsgemäßen Pleuellagerschale nach dem Aufsputtern der Overlay-Schicht;
- Figuren 3a - 3f: ein Schliffbild und rasterelektronenmikroskopische Auswertungen wie Figuren 2a - 2f nach 500 h Warmauslagerung bei 180°;
- Figuren 4a - 2f: ein Schliffbild und rasterelektronenmikroskopische Auswertungen des Gehalts an Al, Zn, Cu, Sn und Ni bei einem Gleitlagerverbundwerkstoff einer Pleuellagerschale mit separat aufgebrachter Diffusionssperrschicht nach dem Aufsputtern der Overlay-Schicht;
- Figuren 5a - 5f: ein Schliffbild und rasterelektronenmikroskopische Auswertungen wie Figuren 4a - 4f nach 500 h Warmauslagerung bei 180°.

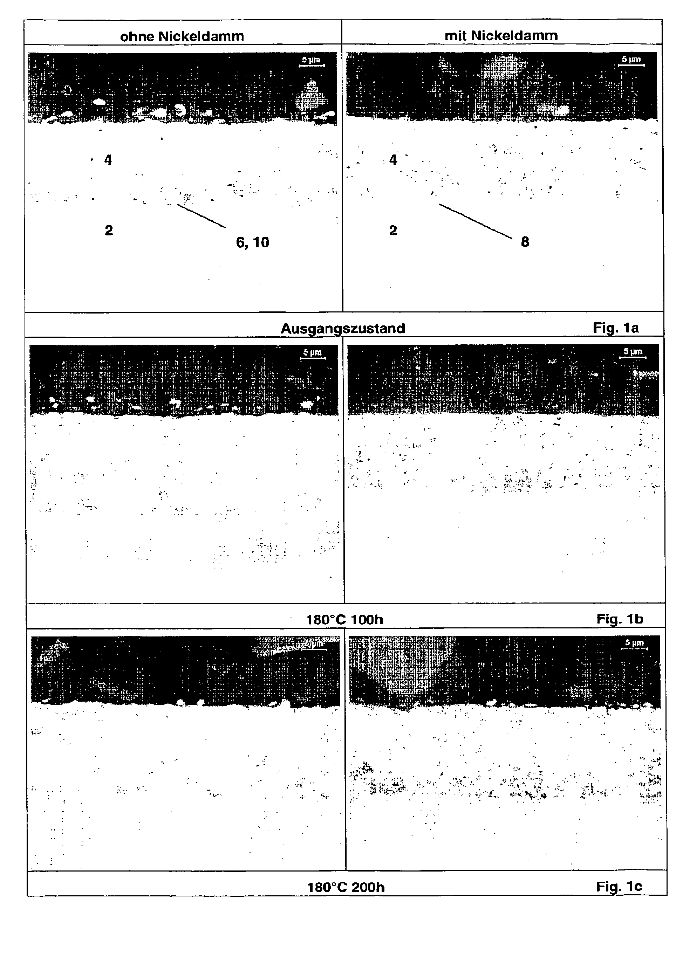

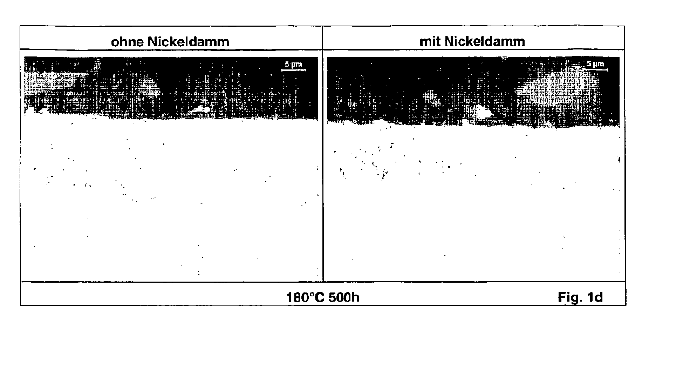

Figur 1a zeigt je ein Schliffbild eines Schnitts durch eine erfindungsgemäße Pleuellagerschale der Zusammensetzung CuZn(20,7)Mn(2,3)Ni(2,2)Fe(1,4)Al(2,2), wobei bei den Figuren links vor dem Aufsputtern einer AlSn20-Legierung als Overlay-Schicht keine Diffusionssperrschicht vorgesehen wurde und bei den Figuren rechts eine Diffusionssperrschicht in Form eines mindestens 2 µm dicken Nickeldamms aufgebracht wurde. Die Figuren 1b, c und d zeigen entsprechende Schliffbilder, jedoch nach einer Warmauslagerung der betreffenden Pleuellagerschale bei 180°C, nach 100 h (Figur 1b), nach 200 h (Figur 1c) und nach 500 h (Figur 1d).

Das Bezugszeichen 2 bezeichnet die Gleitschicht und das Bezugszeichen 4 die aufgesputterte Overlay-Schicht. Man erkennt anhand der lichtmikroskopisch gewonnenen Schliffbilder keine Veränderung in Folge der Warmauslagerung. Man erkennt jedoch eine sehr dünne Übergangsschicht 6 zwischen der Gleitschicht 2 und der Overlay-Schicht 4 (links) und die sehr dicke, vor dem Aufsputtern der Overlay-Schicht 4 separat ausgebildete Diffusionssperrschicht 8 (rechts).

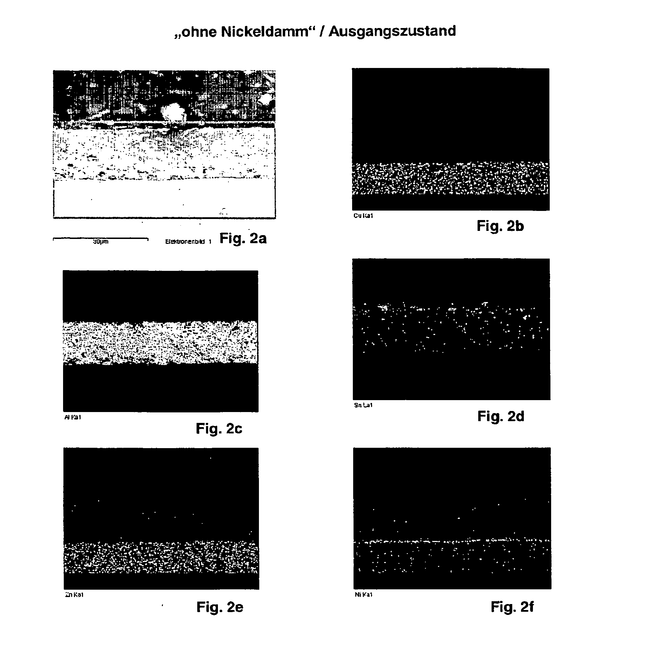

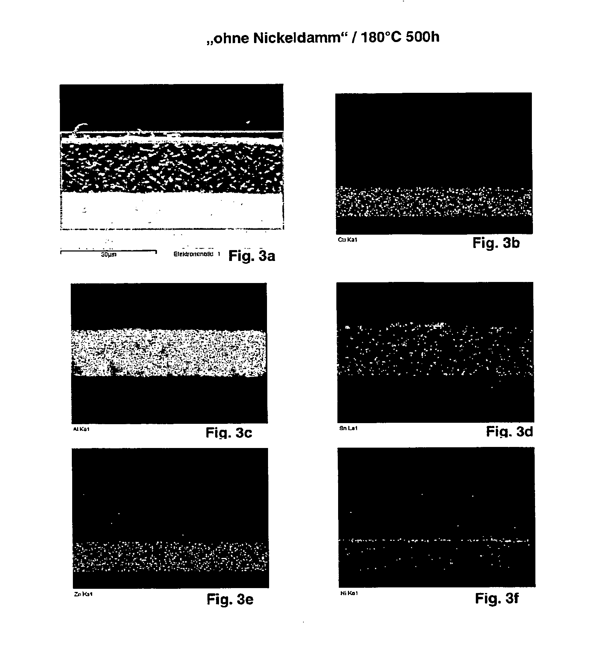

Wie sich durch rasterelektronenmikroskopische Auswertungen des Schichtenaufbaus der erfindungsgemäßen Pleuellagerschale nach den Figuren 2a bis f (zustand unmittelbar nach dem Aufsputtern der AlSn20-Overlay-Schicht) und Figuren 3a bis f (nach Warmauslagerung bei 180° C, 500 h) ergibt, handelt es sich bei der dünnen Übergangsschicht um eine Nickel-Schicht, also um eine sich schon beim Aufsputtern ausbildende Nickelsperrschicht 10, die, wie die Untersuchungen nach Figuren 3a bis f zeigen, auch nach 500 h Warmauslagerung stabil ist.

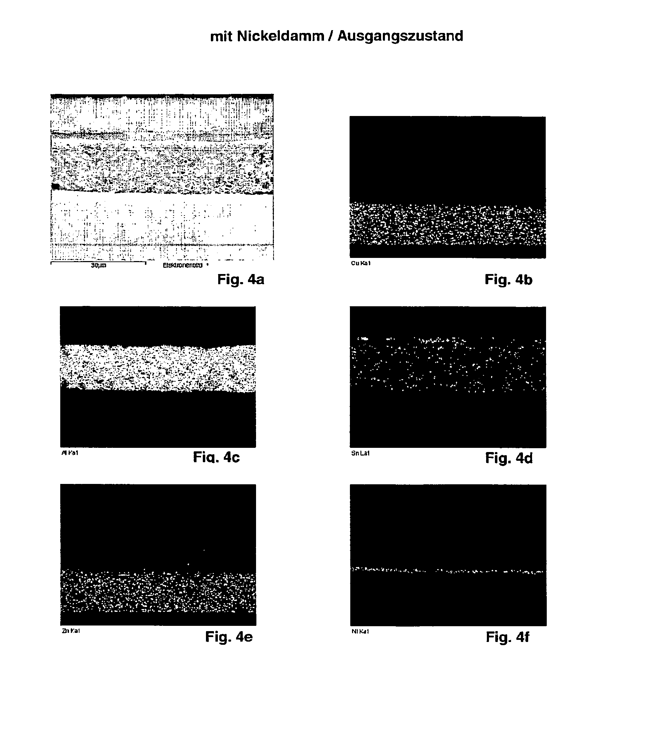

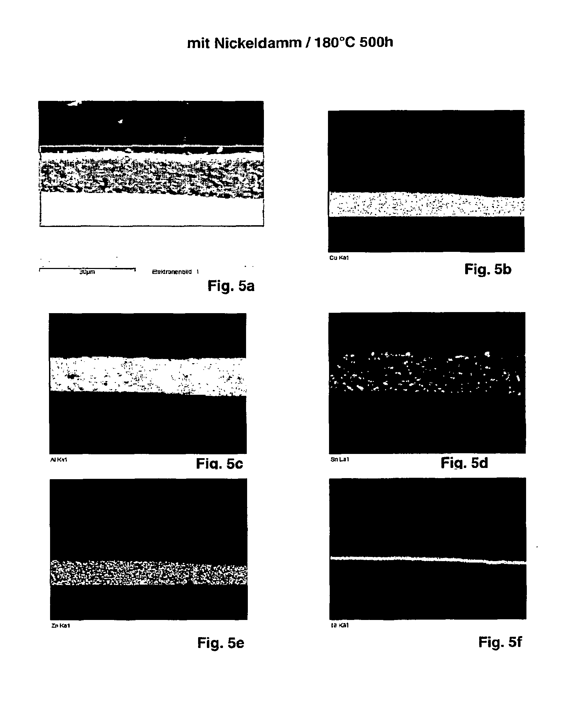

Zum Vergleich wurde in den Figuren 4a bis f und 5a bis f eine Pleuellagerschale anhand von Schliffbildern untersucht, bei der eine AlSn20-Overlay-Schicht auf eine zuvor aufgebrachte dicke Nickelsperrschicht aufgesputtert wurde.

## Patentansprüche

1. Pleuellagerschale oder -buchse bei Verbrennungsmotoren oder Hauptlagerschale zur Lagerung der Kurbelwelle bei Verbrennungsmotoren, aus einem Gleitlagerverbundwerkstoff mit einer metallischen, insbesondere aus Stahl gebildeten Stützschicht und einer darauf aufgebrachten metallischen Gleitschicht (2), wobei die Gleitschicht (2) von einer Kupfer-Zink-Legierung mit 10 - 25 Gew.-% Zn und 1-8 Gew.-% Ni gebildet ist, und mit einer dem Gleitpartner zugewandten aufgesputterten Overlay-Schicht (4) aus einer Aluminium-Zinn-Legierung, **dadurch gekennzeichnet, dass** die aufgesputterte Overlay-Schicht (4) unmittelbar auf die Gleitschicht (2) aufgesputtert ist und dass **dadurch** eine dünne Nickel-Sperrschicht (10) gebildet ist, die eine Dicke von weniger als 1 µm aufweist.

2. Pleuellagerschale oder -buchse oder Hauptlagerschale nach Anspruch 1, **dadurch gekennzeichnet, dass** die Nickel-Sperrschicht (10) eine Dicke von weniger als 0,9 µm, insbesondere von weniger als 0,8 µm, insbesondere von weniger als 0,7 µm, insbesondere von weniger als 0,6 µm und weiter insbesondere von weniger als 0,5 µm aufweist.

3. Pleuellagerschale oder -buchse oder Hauptlagerschale nach Anspruch 1 oder 2, **dadurch gekennzeichnet, dass** die Nickel-Sperrschicht (10) eine Dicke von wenigstens 0,1 µm, insbesondere von wenigstens 0,2 µm aufweist.

4. Pleuellagerschale oder -buchse oder Hauptlagerschale nach Anspruch 1, 2 oder 3, **dadurch gekennzeichnet, dass** die Gleitschicht (2) 1 - 3 Gew.-% Mn aufweist.

5. Pleuellagerschale oder -buchse oder Hauptlagerschale nach einem oder mehreren der vorstehenden Ansprüche, **dadurch gekennzeichnet, dass** die Gleitschicht (2) 0,5 - 6 Gew.-%, insbesondere 1 - 4,5 Gew.-% Fe aufweist.

6. Pleuellagerschale oder -buchse oder Hauptlagerschale nach einem oder mehreren der vorstehenden Ansprüche, **dadurch gekennzeichnet, dass** die Gleitschicht (2) 2 - 7 Gew.-% Ni aufweist.

7. Pleuellagerschale oder -buchse oder Hauptlagerschale nach einem oder mehreren der vorstehenden Ansprüche, **dadurch gekennzeichnet, dass** die Gleitschicht (2) 1 - 3 Gew.-% A1 aufweist.

8. Pleuellagerschale oder -buchse oder Hauptlagerschale nach einem oder mehreren der vorstehenden Ansprüche, **dadurch gekennzeichnet**, die Gleitschicht (2) von einer Kupfer-Zink-Legierung gebildet ist mit 10 - 25 Gew.-% Zn, 1 - 3 Gew.-% Mn, 1-8 Gew.-% Ni, 2-6 Gew.-% Fe und Rest Kupfer sowie mit verunreinigungsbedingten Bestandteilen von jeweils max. 0,1 Gew.-%, in der Summe bis max. 1 Gew.-%, und dass die Gleitschicht ausschließlich in der α-Phase kristallisiert ist.

9. Pleuellagerschale oder -buchse bei Verbrennungsmotoren oder Hauptlagerschale zur Lagerung der Kurbelwelle bei Verbrennungsmotoren nach einem oder mehreren der vorstehenden Ansprüche, **dadurch** erhältlich, dass die Overlay-Schicht (4) aus einer Aluminium-Zinn-Legierung ohne vorheriges Vorsehen einer Diffusionssperrschicht unmittelbar auf die Gleitschicht (2) aufgesputtert wird.

10. Verfahren zum Herstellen einer Pleuellagerschale oder - buchse bei Verbrennungsmotoren oder Hauptlagerschale zur Lagerung der Kurbelwelle bei Verbrennungsmotoren nach einem oder mehreren der vorstehenden Ansprüche 1 - 8, **dadurch gekennzeichnet, dass** die Overlay-Schicht (4) aus einer Aluminium-Zinn-Legierung ohne vorheriges Vorsehen einer Diffusionssperrschicht unmittelbar auf die Gleitschicht (2) aufgesputtert wird.

11. Verfahren nach Anspruch 10, **dadurch gekennzeichnet, dass** die Gleitschicht (2) vor dem Aufsputtern plasma-geätzt wird.

## Claims

1. A connecting rod bearing shell or bush in combustion engines, or main bearing shell, for supporting the crankshaft in combustion engines, comprising a slide bearing composite material having a metal, in particular steel, support layer and a metal sliding layer (2) applied over it, the sliding layer (2) being formed by a copper-zinc alloy having from 10-25 weight % Zn and 1-8 weight % Ni, and having an overlay layer (4), applied by sputtering, oriented toward the sliding partner, the overlay layer comprising an aluminum-tin alloy,
**characterized in that** the overlay layer (4) applied by sputtering is sputtered directly onto the sliding layer (2); and that a thin nickel barrier layer (10) is thereby formed that has a thickness of less than 1 µm.

2. The connecting rod bearing shell or bush or main bearing shell as defined by claim 1, **characterized in that** the nickel barrier layer (10) has a thickness of less than 0,9 µm, in particular less than 0,8 µm, in particular less than 0,7 µm, in particular less than 0,6 µm, and furthermore in particular less than 0,5 µm.

3. The connecting rod bearing shell or bush or main bearing shell as defined by claim 1 or 2, **characterized in that** the nickel barrier layer (10) has a thickness of at least 0,1 µm, in particular at least 0,2 µm.

4. The connecting rod bearing shell or bush or main bearing shell as defined by claim 1, 2 or 3, **characterized in that** the sliding layer (2) has from 1-3 weight % Mn.

5. The connecting rod bearing shell or bush or main bearing shell as defined by one or more of the foregoing claims, **characterized in that** the sliding layer (2) has from 0,5 to 6 weight %, in particular from 1 to 4,5 weight % Fe.

6. The connecting rod bearing shell or bush or main bearing shell as defined by one or more of the foregoing claims, **characterized in that** the sliding layer (2) has from 2-7 weight %Ni.

7. The connecting rod bearing shell or bush or main bearing shell as defined by one or more of the foregoing claims, **characterized in that** the sliding layer (2) has from 1-3 weight % Al.

8. The connecting rod bearing shell or bush or main bearing shell as defined by one or more of the foregoing claims, **characterized in that** the sliding layer (2) is formed by a copper-zinc alloy having from 10-25 weight % Zn, 1-3 weight % Mn, 1-8 weight % Ni, 2-6 weight % Fe, the remainder being copper, as well as contamination-caused components each amounting to a maximum of 0,1 weight %, totalling a maximum of 1 weight %; and that the sliding layer is crystallized solely in the α phase.

9. A connecting rod bearing shell or bush in combustion engines, or main bearing shell, for supporting the crankshaft in combustion engines, as defined by one or more of the foregoing claims, obtainable in that the overlay layer (4) comprising an aluminum-tin alloy is applied by sputtering directly onto the sliding layer (2) without prior provision of a diffusion barrier layer.

10. A method for producing a connecting rod bearing shell or bush in combustion engines, or main bearing shell, for supporting the crankshaft in combustion engines, as defined by one or more of the foregoing claims 1-8, **characterized in that** the overlay layer (4) comprising an aluminum-tin alloy is applied by sputtering directly onto the sliding layer (2) without prior provision of a diffusion barrier layer.

11. The method as defined by claim 10, **characterized in that** the sliding layer (2) is plasma-etched before being applied by sputtering.

## Revendications

1. Coquille de coussinet de tête de bielle ou bague de pied de bielle d'un moteur à combustion ou coquille de coussinet de palier principal destinée à soutenir un vilebrequin de moteur à combustion, en matériau composite pour palier lisse avec une couche d'appui métallique, notamment en acier, et une couche de glissement métallique (2) rapportée sur ladite couche d'appui, la couche de glissement (2) étant formée d'un alliage cuivre-zinc avec 10 à 25 % en poids de zinc et 1 à 8 % en poids de nickel, et avec une couche antifriction (4) en alliage aluminium-étain déposée par pulvérisation cathodique en regard de l'élément glissant antagoniste, **caractérisée en ce que** la couche anti-friction (4) déposée par pulvérisation cathodique est déposée directement sur la couche de glissement (2) et **en ce qu'**il se forme de ce fait une fine couche barrière à base de nickel (10) d'une épaisseur inférieure à 1 µm.

2. Coquille de coussinet de tête de bielle ou bague de pied de bielle ou coquille de coussinet de palier principal selon la revendication 1, **caractérisée en ce que** la couche barrière à base de nickel (10) a une épaisseur inférieure à 0,9 µm, en particulier inférieure à 0,8 µm, notamment inférieure à 0,7 µm , en particulier inférieure à 0,6 µm et notamment encore inférieure à 0,5 µm.

3. Coquille de coussinet de tête de bielle ou bague de pied de bielle ou coquille de coussinet de palier principal selon la revendication 1 ou la revendication 2, **caractérisée en ce que** la couche barrière à base de nickel (10) a une épaisseur supérieure ou égale à 0,1 µm, notamment supérieure ou égale à 0,2 µm.

4. Coquille de coussinet de tête de bielle ou bague de pied de bielle ou coquille de coussinet de palier principal selon l'une quelconque des revendications 1, 2 ou 3, **caractérisée en ce que** la couche de glissement (2) contient 1 à 3 % en poids de Mn.

5. Coquille de coussinet de tête de bielle ou bague de pied de bielle ou coquille de coussinet de palier principal selon une ou plusieurs des revendications précédentes, **caractérisée en ce que** la couche de glissement (2) contient 0,5 à 6 %, en particulier 1 à 4,5 % en poids de Fe.

6. Coquille de coussinet de tête de bielle ou bague de pied de bielle ou coquille de coussinet de palier principal selon une ou plusieurs des revendications précédentes, **caractérisée en ce que** la couche de glissement (2) contient 2 à 7 % en poids de Ni.

7. Coquille de coussinet de tête de bielle ou bague de pied de bielle ou coquille de coussinet de palier principal selon une ou plusieurs des revendications précédentes, **caractérisée en ce que** la couche de glissement (2) contient 1 à 3 % en poids d'Al.

8. Coquille de coussinet de tête de bielle ou bague de pied de bielle ou coquille de coussinet de palier principal selon une ou plusieurs des revendications précédentes, **caractérisée en ce que** la couche de glissement (2) est composée d'un alliage cuivre-zinc avec 10 à 25 % en poids de Zn, 1 à 3 % en poids de Mn, 1 à 8 % en poids de Ni, 2 à 6 % en poids de Fe et, pour le reste, du cuivre ainsi que des composants liés aux impuretés dont le pourcentage individuel est inférieur ou égal à 0,1 % en poids et dont le pourcentage cumulé est inférieur ou égal à 1 % en poids, et **en ce que** la couche de glissement est cristallisée exclusivement dans la phase α.

9. Coquille de coussinet de tête de bielle ou bague de pied de bielle d'un moteur à combustion ou coquille de coussinet de palier principal destinée à soutenir un vilebrequin de moteur à combustion selon une ou plusieurs des revendications précédentes, susceptible d'être obtenue par déposition de la couche anti-friction (4) en alliage aluminium-étain par pulvérisation cathodique directement sur la couche de glissement (2) sans application préalable d'une couche barrière de diffusion.

10. Procédé de fabrication d'une coquille de coussinet de tête de bielle ou bague de pied de bielle d'un moteur à combustion ou coquille de coussinet de palier principal destinée à soutenir un vilebrequin de moteur à combustion selon une ou plusieurs des revendications 1 à 8, **caractérisé en ce que** la couche anti-friction (4) en alliage aluminium-étain est déposée par pulvérisation cathodique directement sur la couche de glissement (2) sans application préalable d'une couche barrière de diffusion.

11. Procédé selon la revendication 10, **caractérisé en ce que** la couche de glissement (2) est décapée par plasma avant l'opération de dépôt par pulvérisation cathodique.
